(19) Europäisches Patentamt
European Patent Office
Office européen des brevets

(11) Numéro de publication: **0 000 852**
**B1**

(12) **FASCICULE DE BREVET EUROPEEN**

(45) Date de publication du fascicule du brevet: **25.08.82**

(21) Numéro de dépôt: **78400063.0**

(22) Date de dépôt: **21.07.78**

(51) Int. Cl.³: **A 01 N 33/08,**
A 01 N 33/04,
A 01 N 31/02,
A 01 N 29/02,
C 09 K 17/00,
C 07 C 103/44,
C 07 C 103/375

(54) **Procédé de traitement des cultures utilisant des dérivés de dichloroacétamide ou de trichloroacétamide, nouveaux dérivés de dichloroacétamide ou de trichloroacétamide utilisables à cet effet et procédé pour leur préparation.**

(30) Priorité: **03.08.77 FR 7723866**

(43) Date de publication de la demande:
**21.02.79 Bulletin 79/4**

(45) Mention de la délivrance du brevet:
**25.08.82 Bulletin 82/34**

(84) Etats contractants désignés:
**BE DE FR GB LU NL**

(56) Documents cités:
**DE - A - 1 617 459**
**DE - A - 2 047 258**
**DE - B - 1 186 467**
**FR - A - 2 340 927**
**US - A - 2 742 501**
**US - A - 3 923 494**

(73) Titulaire: **P C U K PRODUITS CHIMIQUES UGINE KUHLMANN**
**Service Propriété Industrielle Tour Manhattan**
**F-92087 Paris La Defense 2 Cédex 21 (FR)**

(72) Inventeur: **Gorny, Bernard Simon Jean-Marie**
**Le Thicaud Herbeys**
**F-38320 Eybens (FR)**
Inventeur: **Brun, Jean-Paul Marie René**
**25 rue Ambroise Croizat**
**F-38130 Echirolles (FR)**
Inventeur: **Boutemy, Gérard Emile Marcel**
**Le Clos d'Artois Oncy-sur-Ecole**
**F-91490 Milly la Foret (FR)**
Inventeur: **Devif, Michel Louis**
**15 Allée des Cytises**
**F-77960 Chailly en Biere (FR)**

(74) Mandataire: **Houssin, Jean et al,**
**Produits Chimiques Ugine Kuhlmann Service Propriété Industrielle Tour Manhattan Cedex 21**
**F-92087 Paris la Défense (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 000 852 B1

Procédé de traitement des cultures utilisant des dérivés de dichloroacétamide ou de trichloroacétamide, nouveaux dérivés de dichloroacétamide ou de trichloroacétamide utilisables à cet effet et procédés pour leur préparation

La présente invention a pour objet un procédé de traitement des cultures pour les protéger contre les dommages occasionnés par les herbicides appartenant aux familles des chloroacétanilides, urées, triazines, carbamates, uraciles et thiolcarbamates, procédé qui utilise des dérivés de dichloroacétamide ou de trichloroacétamide. L'invention a également pour objet de nouveaux dérivés de dichloroacétamide ou de trichloroacétamide utilisables dans ledit procédé, et leurs procédés de préparation.

Les herbicides existant actuellement peuvent être classés en deux catégories: les herbicides totaux, qui détruisent toutes les plantes, et les herbicides sélectifs. Ces derniers, qui sont les plus précieux en agriculture, permettent de détruire les mauvaises herbes présentes dans les cultures sans nuire à la plante cultivée et sont dits, pour cette raison, sélectifs de la plante cultivée. Malheureusement il arrive que cette sélectivité ne soit pas parfaite à la dose d'emploi et que les herbicides sélectifs présentent une certaine phytotoxicité vis-à-vis de la plante cultivée.

Aussi utilise-t-on, en association avec les herbicides, des produits dits antidotes d'herbicides qui ont la propriété de conférer aux herbicides une sélectivité accrue ou des sélectivités nouvelles, sans nuire à leur qualité herbicide. Autrement dit l'antidote fait disparaitre totalement ou tout au moins en grande partie, la phytotoxicité de l'herbicide vis-à-vis de la plante cultivée sans réduire sa phytotoxicité vis-à-vis des plantes indésirables.

De tels produits antidotes d'herbicides ont par exemple été décrits dans les brevets français Nos 2 133 793, 2 212 336, 2 215 170, 2 228 065, 2 309 546 et 2 310 348 et dans les brevets US Nos 3 867 444, 3 923 494, 3 931 313 et 3 959 304. Le brevet US 3 923 494 en particulier décrit des composés antidotes d'herbicides répondant à la formule:

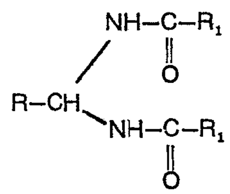

dans laquelle $R_1$ est un groupe haloalkyle bas et R est un groupe alkyle, alcényle, phényle, phénalcényle, naphtyl, cyanoalkyle ou phényl substitué par $OCH_3$, $NO_2$, Cl, Br, méthylènedioxy-3,4 ou alkyl bas mono- ou disubstitué.

Il est en outre connu par le DE - A - 2 047 258 des N,N-trichloréthylidène-bis-amides ou -thiocarbamides de formule:

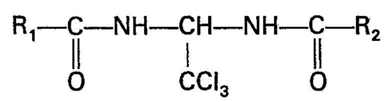

dans laquelle $R_1$ et $R_2$ sont différents, $R_1$ représente un atome d'hydrogène ou un groupe alkyle, aryle ou cycloalkyle éventuellement substitué par des atomes d'halogène ou des groupes nitro et $R_2$ représente un groupe alkyle, aryle, cycloalkyle, alkylthio, arylthio ou cycloalkylthio éventuellement substitué par des atomes d'halogène ou des groupes nitro. Ces composés peuvent être utilisés comme produits intermédiaires ou finaux pour la préparation de médicaments ou de biocides. Il n'est pas indiqué dans le DE - A - 2 047 258 que ces composés soient utilisables comme antidotes d'herbicides.

Le procédé de traitement des cultures selon l'invention consiste à appliquer sur la surface cultivée, en prélevée ou en post-levée de la culture, avant ou après application de l'herbicide ou en même temps que ce dernier, ou sur la semence de la culture un composé antidote d'herbicides répondant à la formule:

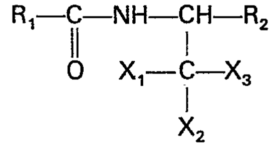

(I)

dans laquelle $R_1$ représente un groupement dichlorométhyle ou trichlorométhyle, $X_1$ représente un atome de chlore ou de fluor, $X_2$ représente un atome de chlore ou de fluor, $X_3$ représente un atome d'hydrogène, de chlore ou de fluor, $R_2$ représente un groupe amino $NH_2$ ou un groupe

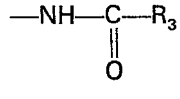

où $R_3$ représente un atome d'hydrogène ou un groupe alkyle, haloalkyle, alkényle, haloalkényle, arylalkyle, arylhaloalkyle, cycloalkyle, halocycloalkyle, alcoxyalkyle, haloalcoxyalkyle ou aryle, ce dernier étant éventuellement substitué par un ou deux atomes d'halogène ou par un groupe alkyle, alcoxy, nitro ou haloalkyle.

Dans les définitions données ci-dessus pour $R_3$, les chaînes alkyle et alcoxy des groupes alkyle, haloalkyle, arylalkyle, arylhaloalkyle, alcoxyalkyle et haloalcoxyalkyle ont de préférence 1 à 5 atomes de carbone, les chaînes alkényle des groupes alkényle et haloalkényle ont de préférence 2 à 5 atomes de carbone, les groupes cycloalkyle et halocycloalkyle ont de préférence 3 à 6 atomes de carbone, les groupes haloalkyle, haloalkényle, arylhaloalkyle, halocycloalkyle, haloalcoxyalkyle ont de préférence 1 à 7 atomes d'halogène pris parmi les atomes de chlore, brome ou fluor, aryl désigne de préférence phényl et le substituant halogène du groupe aryle est de préférence un atome de chlore.

Dans la formule (I) ci-dessus $R_2$ est de préférence $NH_2$ ou un groupe

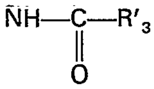

dans lequel $R'_3$ est un atome d'hydrogène, un groupe alkyle ayant 1 à 5 atomes de carbone, un groupe alcényle ayant 2 à 5 atomes de carbone, un groupe haloalkyle ayant 1 à 5 atomes de carbone et 1 à 7 atomes d'halogène, ou un groupe phényle substitué par un ou deux atomes de chlore. Quant $R'_3$ est un groupe haloalkyle, il est de préférence un groupe

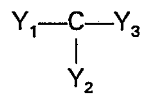

dans lequel $Y_1$ est un atome de chlore ou de fluor, $Y_2$ est un atome de chlore ou de fluor et $Y_3$ est un atome d'hydrogène, de chlore ou de fluor.

Les composés de formule (I) pour lesquels $R_2$ représente un groupe amino $NH_2$ sont des produits nouveaux. De même les composés de formule (I) pour lesquels $X_1$, $X_2$, $X_3$ ne sont pas tous les trois des atomes de chlore et $R_2$ est un groupe

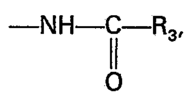

$R_3$ ayant les significations indiquées à la formule (I), sont des produits nouveaux.

Les composés de formule (I) pour lesquels $R_2$ est un groupe

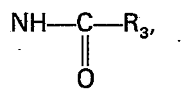

en particulier ceux qui sont nouveaux, peuvent être préparés par plusieurs méthodes, à savoir:

1°) action d'un chlorure d'acide de formule

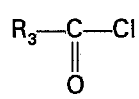

sur un composé aminé de formule (II) ci-dessous suivant la réaction:

(1)

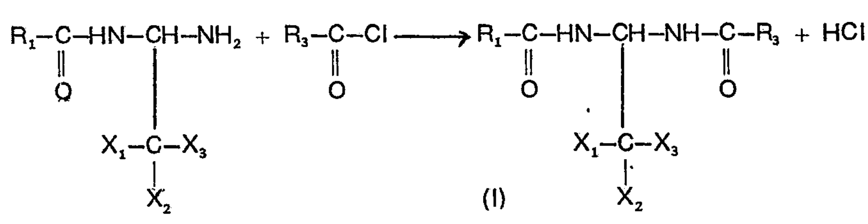

(II) (I)

2°) action d'un chlorure d'acide de formule

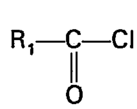

sur un composé aminé de formule (III) ci-dessous suivant la réaction:

(2) 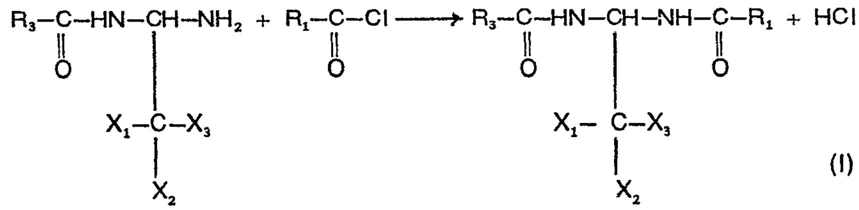

(III) (I)

3°) action d'un amide de formule

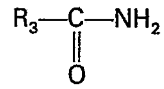

sur un dérivé chloré de formule (IV) ci-dessous suivant la réaction:

(3) 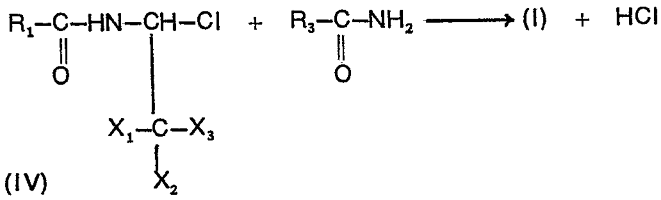

(IV)

4°) action d'un amide de formule 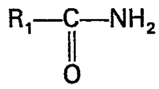

sur un dérivé chloré de formule (V) ci-dessous suivant la réaction:

(4) 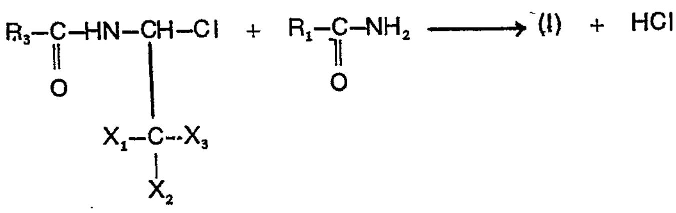

(V)

Dans les formules (II), (III), (IV), (V) ci-dessus ainsi que dans celles des chlorures d'acide et amides, $X_1$, $X_2$, $X_3$, $R_1$ et $R_3$ ont les mêmes significations que dans la formule (I).

Les réactions (1), (2), (3), (4) sont effectuées de préférence dans un solvant inerte tel par exemple un éther linéaire ou cyclique, un hydrocarbure aliphatique ou aromatique ou un dérivé chloré d'un hydrocarbure aliphatique ou aromatique, à une température comprise entre −30°C et +60°C et de préférence entre −15°C et +30°C. L'acide chlorhydrique formé dans la réaction est neutralisé, au fur et à mesure de sa formation, par une base minérale comme par exemple un hydroxyde de métal alcalin ou alcalino-terreux ou par une amine tertiaire comme par exemple la triéthylamine ou la pyridine. Après séparation par extraction à l'eau ou par filtration du chlorure de la base minérale ou du chlorhydrate de l'amine, le produit de formule (I) formé est isolé à l'état brut par élimination du solvant par distillation. Il peut être purifié, par exemple par recristallisation, ou utilisé tel quel.

Les composés de formule (I) pour lesquels $R_2$ est un groupe $NH_2$, qui sont identiques aux composés de formule (II), et les composés de formule (III) peuvent être préparés par action de l'ammoniac sur les dérivés chlorés de formules (IV) et (V). La réaction est réalisée dans les mêmes solvants que ceux utilisés pour les réactions (1) à (4) et de préférence dans un éther cyclique comme par exemple le tétrahydrofuranne. Le dérivé chloré de formule (IV) ou (V) est introduit dans le solvant saturé en ammoniac, à une température comprise entre − 30°C et + 30°C. Le chlorure d'ammonium formé est éliminé par filtration et le composé de formule (II) ou (III) est isolé à l'état brut par élimination du solvant. Il peut être purifié par recristallisation ou utilisé tel quel, en particulier pour effectuer les réactions (1) ou (2).

Les composés de formule (IV) et (V) peuvent être préparés par action du chlorure de thionyle sur les composés hydroxylés de formules:

(VI) 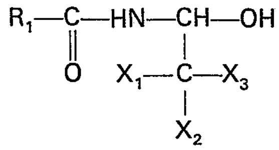 (VII) 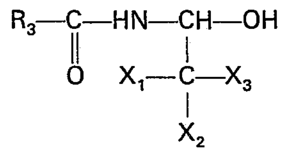

dans lesquelles $R_1$, $R_3$, $X_1$, $X_2$, $X_3$ ont les mêmes significations que dans la formule (I). La réaction peut être réalisée, en présence ou non d'un solvant, avec un excès de chlorure de thionyle, à une température comprise entre 50°C et 80°C. Le solvant utilisé peut être identique à ceux utilisés pour effectuer les réactions (1) à (4). Dans le cas où on opère sans solvant, et aussi quand on opère avec certains solvants comme par exemple $CCl_4$ ou l'hexane, le composé de formule (IV) ou (V) précipite et peut être isolé par filtration.

Dans le cas où on opère avec d'autres solvants comme par exemple le tétrahydrofuranne, le composé de formule (IV) ou (V) ne précipite pas. On peut alors soit isoler le produit en évaporant sous vide le solvant, soit utiliser directement le milieu obtenu en fin de réaction pour la suite du processus conduisant aux composés (I), sans isoler les produits (IV) ou (V).

Les composés hydroxylés de formules (VI) ou (VII) peuvent être préparés par action d'un amide de formule

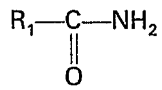 ou 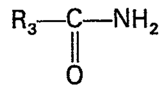

sur un aldéhyde halogéné de formule

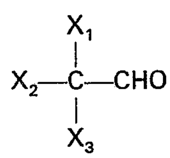

suivant les procédés décrits par Joseph P. LAROCCA, John M. LEONARD, Warren E. WEAVER [Journal of Organic Chemistry *16*, 47—50, (1951)] et par A. BOUCHERLE, G. CARRAZ, J. VIGIER [Bull. Trav. Soc. Pharm. Lyon *10* (1), 3—10, (1966)].

Les composés de formule (I) peuvent être utilisés, en tant qu'antidotes d'herbicides, pour le traitement des cultures. Ils protègent les plantes cultivées contre les dommages occasionnés par les herbicides, et ce aux doses d'herbicides efficaces vis-à-vis des plantes indésirables.

Les composés de formule (I) peuvent en particulier être employés en association avec les herbicides appartenant aux familles des chloroacétanilides, urées, triazines, carbamates, uraciles et plus spécialement des thiolcarbamates. Comme tels on peut citer par exemple le N,N-dipropyl thiolcarbamate d'éthyle (EPTC), le N,N-diisobutyl thiolcarbamate d'éthyle (butylate), le N,N-dipropyl thiolcarbamate de propyle, le N,N-diéthyl thiolcarbamate d'éthyle (éthiolate), le N,N-cyclohexaméthylène thiolcarbamate d'éthyle (molinate), le N-éthyl N-cyclohexyl thiolcarbamate d'éthyle (cycloate), le N,N-diisopropyl thiolcarbamate de dichloro-2,3 propényle (diallate), le N,N-diisopropyl thiolcarbamate d'éthyle, le N-(chloro-3 phényl) carbamate de chloro-4 butynyle-2 (barban), la (chloro-3 méthyl-4 phényl)-3 diméthyl-1,1 urée (chlortoluron), la (dichloro-3,4 phényl)-3 méthoxy-1 méthyl-1 urée (linuron), la (dichloro-3,4 phényl)-3 diméthyl-1,1 urée, la N-chloroacétyl N-isopropyl aniline (propachlor), la diéthyl-2,6 N-chloroacétyl N-méthoxyméthyl aniline (alachlor), la chloro-2 éthylamino-4 isopropylamino-6 triazine-1,3,5 (atrazine), la chloro-2 bis (éthylamino)-4,6 triazine-1,3,5 la chloro-2 cyclopropylamino-4 isopropylamino-6 triazine-1,3,5 et leurs combinaisons. Le rapport en poids

$$\frac{\text{produit antidote}}{\text{herbicide}}$$

à employer peut varier beaucoup selon la nature de l'herbicide concerné. Ce rapport est en général compris entre 0,001 et 10, et le plus souvent entre 0,01 et 5.

Pour leur mise en oeuvre les composés de formule (I) peuvent être incorporés, conjointement avec l'herbicide ou séparément, dans des compositions que contiennent, outre la matière active (c'est-à-dire le composé antidote et éventuellement l'herbicide), les additifs inertes habituellement utilisés en agriculture pour faciliter la conservation, la mise en oeuvre et la pénétration dans les plantes des produits actifs, tels que charges minérales (talc, silice, kieselguhr, terre de diatomées, argile etc.), diluants organiques divers (huiles minérales, solvants organiques), tensioactifs, antioxydants et stabilisants. De telles compositions peuvent se présente sous la forme de poudres mouillables,

solutions émulsifiables dans l'eau, granulés ou toute autre forme en usage dans le domaine des herbicides. Dans les compositions contenant seulement un composé antidote selon l'invention et des additifs inertes, le teneur en composé antidote peut varier de 10% à 90% en poids. Dans les compositions contenant un composé antidote selon l'invention, un herbicide et des additifs inertes, la teneur en composé antidote peut varier de 0,09% à 50% en poids, celle en herbicide de 1% à 90% en poids, le rapport en poids

$$\frac{\text{produits antidote}}{\text{herbicide}}$$

étant compris entre 0,001 et 10.

Les composés antidotes selon l'invention peuvent être appliqués sur le sol en même temps que l'herbicide, en prélevée ou en post-levée de la culture. La dose en produit antidote apportée peut varier de 100 g à 5000 g par hectare. Pour une telle application il est avantageux d'utiliser des compositions contenant simultanément le produit antidote et l'herbicide, telles que celles citées précédemment.

Les composés antidotes selon l'invention peuvent aussi être appliqués sur le sol à une époque différente de celle du traitement par l'herbicide, en pré-levée ou en post-levée de la culture, la dose en produit antidote apportée étant la même que ci-dessus. Ils peuvent en particulier être appliqués sur des sols contenant des résidus d'herbicide afin de protéger les cultures contre l'activité rémanente de ces résidus.

Enfin les composés antidotes selon l'invention peuvent aussi être appliqués sur la semence de la culture à protéger, ladite semence étant ensuite semée dans une terre déjà traitée avec l'herbicide ou qui sera traitée avec l'herbicide. Pour le traitement des semences la dose en produit antidote apportée peut varier de 10 g à 500 g par quintal de semence.

Les exemples suivants illustrent l'invention sans la limiter.

EXEMPLE N° 1

Préparation du composé de formule:

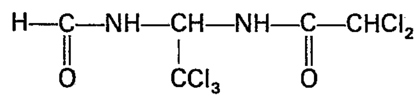

On dissout 19,15 g (0,1 mole) de N-[(trichloro-2,2,2 amino-1) éthyl] formamide dans 200 ml de tétrahydrofuranne (THF). On ajoute 10,1 g de triéthylamine (0,1 mole). En maintenant la température à 15°C, on ajoute sous agitation, en environ 30 minutes, 14,75 g de chlorure de dichloroacétyle (0,1 mole) dissous dans 100 ml de THF. On maintient ensuite 1/2 heure sous agitation en laissant revenir à la température ambiante. On filtre le précipité de chlorhydrate de triéthylamine. On élimine le THF par distillation sous vide. Au cours de la distillation, il se forme un produit cristallisé qui est séparé. Ce produit est recristallisé dans un mélange benzène-hexane 50—50. On obtient ainsi 24,5 g (soit un rendement de 81%) de N-[(trichloro-2,2,2 dichloroacétamido-1) éthyl] formamide, de point de fusion 141—142°C.

EXEMPLE N° 2

Préparation du composé de formule:

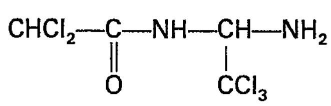

On sature 300 ml de tétrahydrofuranne par de l'ammoniac gazeux et on maintient cette saturation pendant toute la durée de l'opération. En maintenant la température à —5°C, on ajoute sous agitation, en environ 1 h 30 minutes, 150 g (0,5 mole) de N-[(tétrachloro-1,2,2,2) éthyl] dichloroacétamide. Il se forme tout au long de l'addition un précipité de chlorure d'ammonium. Celui-ci est séparé du milieu par filtration. Le THF est ensuite séparé par distillation sous vide. On obtient de cette façon 130 g de N-[(trichloro-2,2,2 amino-1) éthyl] dichloroacétamide (soit un rendement de 94,7%), sous la forme d'un solide blanc de point de fusion 132—133°C.

EXEMPLE N° 3

Préparation du composé de formule:

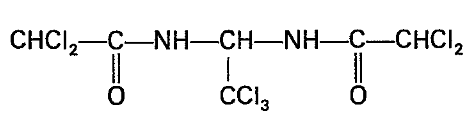

On dissout 10,2 g de dichloroacétamide (0,08 mole) dans 150 ml de chloroforme. On ajoute 10 g

de triéthylamine (0,1 mole). En maintenant la température au voisinage de 0°C, on ajoute sous agitation, en environ 1 h, 23,5 g de N-[(tétrachloro-1,2,2,2) éthyl] dichloroacétamide (0,08 mole) dissous dans 150 ml de chloroforme. On laisse revenir à température ambiante sous agitation, puis on reprend par 1 litre d'eau. Après décantation, la phase organique est séparée et lavée deux fois avec 500 ml d'eau, puis séchée sur sulfate de magnésium. Le chloroforme est distillé sous vide et on obtient un solide qui est recristallisé dans l'hexane. On obtient ainsi 24,5 g de N-[(trichloro-2,2,2 dichloroacétamido-1) éthyl] dichloroacétamide (soit un rendement de 79,5%), de point de fusion 249—250°C.

EXEMPLE N° 4

Préparation du composé de formule:

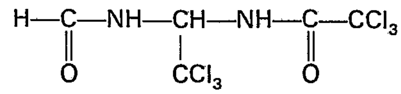

En opérant comme dans l'exemple No 1, mais en remplaçant les 14,75 g de chlorure de dichloroacétyle par 18,2 g de chlorure de trichloroacétyle (0,1 mole), on obtient 25,2 g (soit un rendement de 74,8%) de N-[(trichloro-2,2,2 trichloroacétamido-1) éthyl] formamide, de point de fusion 157—158°C.

EXEMPLE N° 5

Préparation du composé de formule:

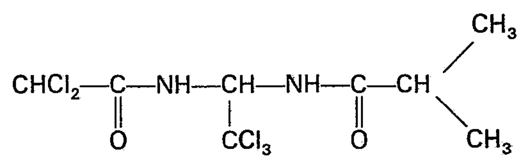

En opérant comme dans l'exemple no 3, mais en remplaçant les 10,2 g de dichloroacétamide par 6,96 g d'isobutyramide (0,08 mole), on obtient 21 g (soit un rendement de 76,3%) de N-[(trichloro-2,2,2 dichloroacétamido-1) éthyl] isobutyramide de point de fusion 264—265°C.

EXEMPLE N° 6

Préparation du composé de formule:

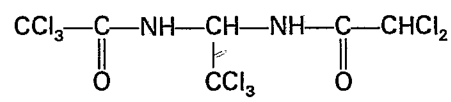

On opère comme dans l'exemple 1, en remplaçant les 19,15 g de N-[(trichloro-2,2,2 amino-1) éthyl] formamide par 24,7 g de N-[(trichloro-2,2,2 amino-1) éthyl] trichloroacétamide (0,08 mole). On obtient ainsi 21,8 g (soit un rendement de 65%) de N-[(trichloro-2,2,2 dichloroacétamido-1) éthyl] trichloroacétamide de point de fusion 184—185°C.

Le N-[(trichloro-2,2,2 amino-1) éthyl] trichloroacétamide utilisé comme produit de départ peut être préparé comme suit:

On sature 300 ml de THF par de l'ammoniac gazeux et on maintient cette saturation pendant toute la durée de l'opération. En maintenant la température à 0°C, on ajoute sous agitation, en environ 1 h, 100 g de N-[(tétrachloro-1,2,2,2) éthyl] trichloroacétamide (0,3 mole). Le précipité de chlorure d'ammonium qui s'est formé est séparé par filtration. Le THF est ensuite séparé par distillation sous vide. On obtient ainsi 59 g de N-[(trichloro-2,2,2 amino-1) éthyl] trichloroacétamide (soit un rendement de 62,7%) sous la forme d'un solide blanc de point de fusion 132—133°C.

EXEMPLE N° 7

Préparation du composé:

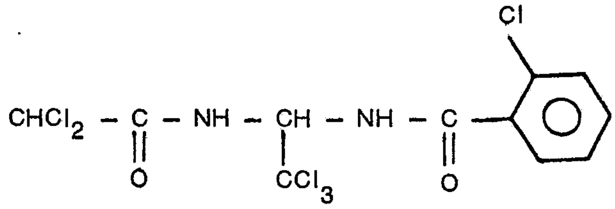

On opère comme dans l'exemple 1, en remplaçant les 19,15 g de N-[(trichloro-2,2,2 amino-1) éthyl] formamide par 18,2 g de N-[(trichloro-2,2,2 amino-1) éthyl] o-chlorobenzamide (0,06 mole) et

en utilisant 10,3 g de chlorure de dichloroacétyle (0,07 mole) au lieu de 14,75 g. On obtient ainsi, après évaporation du solvant, 23 g (soit un rendement de 79,5%) de N-[(trichloro-2,2,2 dichloroacétamido-1) éthyl] o-chlorobenzamide de point de fusion 214—215°C.

Le N-[(trichloro-2,2,2 amino-1) éthyl] o-chlorobenzamide utilisé comme produit de départ peut être préparé comme suit:

On opère comme pour la préparation du N-[(trichloro-2,2,2 amino-1) éthyl] trichloroacétamide mais en remplaçant les 100 g de N-[(tétrachloro-1,2,2,2) éthyl] trichloroacétamide par 100 g de N-[(tétrachloro-1,2,2,2) éthyl] o-chlorobenzamide (0,31 mole). On obtient 89 g (soit un rendement de 94,7%) de N-[(trichloro-2,2,2 amino-1) éthyl] o-chlorobenzamide, solide blanc de point de fusion 169—170°C.

EXEMPLE N° 8

Préparation du composé de formule:

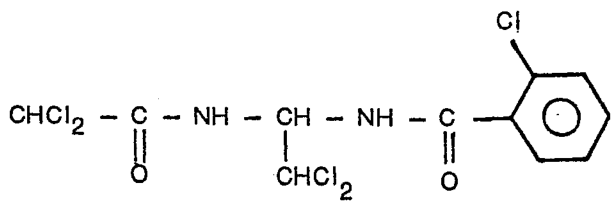

On dissout 24 g de N-[(dichloro-2,2 amino-1) éthyl] dichloroacétamide (0,1 mole) dans 300 ml de tétrahydrofuranne (THF). On ajoute 10,1 g de triéthylamine (0,1 mole). En maintenant la température à 20—25°C, on ajoute sous agitation, en environ 15 minutes, 17,5 g de chlorure d'o-chlorobenzoyle (0,1 mole) dissous dans 50 ml de THF. On maintient ensuite 1 heure sous agitation en laissant revenir à la température ambiante. On filtre le précipité de chlorhydrate de triéthylamine. On sépare le THF par distillation sous vide. On obtient un solide brun qui est recristallisé dans un mélange tétrachlorure de carbone-hexane 50/50. On obtient ainsi 15,3 g (soit un rendement de 40,4%) de N-[(dichloro-2,2 dichloroacétamido-1) éthyl] o-chlorobenzamide de point de fusion 179—180°C.

Le N-[(dichloro-2,2 amino-1) éthyl] dichloroacétamide utilisé comme produit de départ peut être préparé comme indiqué à l'exemple 14.

EXEMPLE N° 9

Préparation du composé de formule:

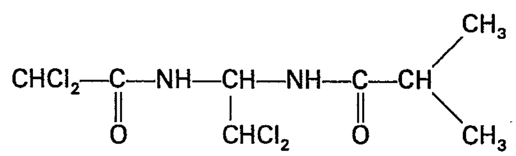

On opère comme dans l'exemple 8, en remplaçant les 17,5 g de chlorure d'o-chlorobenzoyle par 11 g de chlorure d'isobutyryle (0,103 mole). On obtient ainsi 17,7 g (soit un rendement de 57,1%) de N-[(dichloro-2,2-isobutyramido-1) éthyl] dichloracétamide de point de fusion 189—190°C.

EXEMPLE N° 10

Préparation du composé de formule:

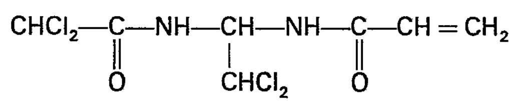

On opère comme dans l'exemple 8, en remplaçant les 17,5 g de chlorure d'o-chlorobenzoyle par 10 g de chlorure d'acryloyle (0,11 mole). On obtient ainsi 12,8 g (soit un rendement de 43,5%) de N-[(dichloro-2,2 acrylamido-1) éthyl] dichloroacétamide.

EXEMPLE N° 11

Préparation du composé de formule:

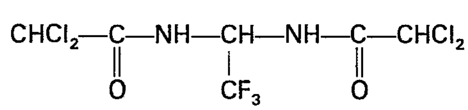

On dissout 6,4 g de dichloroacétamide (0,05 mole) dans 50 ml de THF. On ajoute 7 g de triéthylamine (0,07 mole). En maintenant la température à 0°C, on ajoute sous agitation, en environ 15

minutes, 12,3 g de N-[(trifluoro-2,2,2-chloro-1) éthyl] dichloroacétamide (0,05 mole) dissous dans 20 ml de THF. On maintient ensuite trois heures sous agitation en laissant revenir à la température ambiante. On filtre le chlorhydrate de triéthylamine. Le THF est éliminé par distillation sous vide. On obtient ainsi 15 g (soit un rendement de 89%) de N-[(trifluoro-2,2,2 dichloroacétamido-1) éthyl] dichloroacétamide sous la forme d'un liquide visqueux brun.

Le N-[(trifluoro-2,2,2 chloro-1) éthyl] dichloroacétamide utilisé comme produit de départ peut être préparé comme suit:

On dissout dans 150 ml de benzène 19,2 g de dichloroacétamide (0,15 mole) et on ajoute, en 15 minutes environ, 22 g d'hydrate de fluoral (0,2 mole) et 1 ml d'acide sulfurique. On porte à reflux pendant 6 h sous agitation. Après refroidissement et filtration, on obtient 26,5 g de N-[(trifluoro-2,2,2 hydroxy-1) éthyl] dichloroacétamide (soit un rendement de 78%), sous la forme d'un solide blanc de point de fusion 70—71°C.

Dans un réacteur de 100 ml, on introduit sous agitation 5,5 g de N-[(trifluoro-2,2,2 hydroxy-1) éthyl] dichloroacétamide (0,025 mole) et 7,5 g de chlorure de thionyle (0,06 mole). On porte à reflux pendant 3 heures, puis on ajoute 30 ml d'hexane pour faciliter la précipitation au cours du refroidissement. Après filtration, on obtient 4,4 g de N-[(trifluoro-2,2,2 chloro-1) éthyl] dichloroacétamide (soit un rendement de 72%), sous la forme d'un solide blanc de point de fusion 54—55°C.

EXEMPLE N° 12

Préparation du composé de formule:

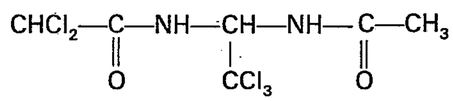

En opérant comme à l'exemple 1, mais en remplaçant le N-[(trichloro-2,2,2 amino-1) éthyl] formamide par le N-[(trichloro-2,2,2 amino-1) éthyl] acétamide, on obtient, avec un rendement de 61,5% le N-[(trichloro-2,2,2, dichloroacétamido-1) éthyl] acétamide, de point de fusion 239—240° C.

Le N-[(trichloro-2,2,2 amino-1) éthyl] acétamide utilisé comme produit de départ est préparé suivant la méthode employée pour préparer le N-[(trichloro-2,2,2 amino-1) éthyl] trichloroacétamide, mais en remplaçant les 100 g de N-[(tétrachloro-1,2,2,2) éthyl] trichloroacétamide par 320 g de N-[(tétrachloro-1,2,2,2) éthyl] acétamide (1,42 mole). L'addition au THF saturé d'ammoniac s'effectue en 1 h 45'. On obtient 262 g de N-[(trichloro-2,2,2 amino-1) éthyl]acétamide (soit un rendement de 89,6%), sous la forme d'un solide blanc de point de fusion 134—135°C.

EXEMPLE N° 13

Préparation du composé de formule:

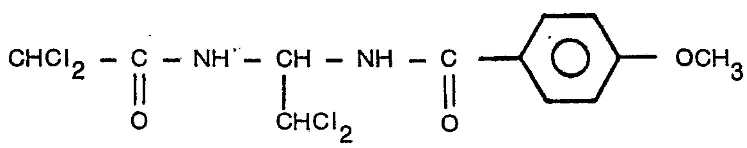

En opérant comme à l'exemple 8, mais en remplaçant le chlorure d'o-chlorobenzoyle par le chlorure de p-méthoxybenzoyle, on obtient, avec un rendement de 70,9%, le N—[(dichloro-2,2 dichloroacétamido-1) éthyl] p-méthoxybenzamide, de point de fusion 171—172°C.

EXEMPLE N° 14

Préparation du composé de formule:

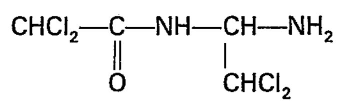

On dissout dans 60 ml de benzène 64 g de dichloroacétamide (0,5 mole) et on ajoute, en 10 minutes environ, 68 g de dichloroacétaldéhyde (0,6 mole) et 1 ml d'acide sulfurique. On porte à reflux pendant 5 heures et on évapore le solvant et l'excès de dichloroacétaldéhyde sous vide. On obtient ainsi 118 g de N—[(dichloro-2,2 hydroxy-1) éthyl] dichloroacétamide brut (soit un rendement de 98%), sous la forme d'un liquide visqueux pratiquement incolore.

| Analyse: | % Cl | % N |
|---|---|---|
| trouvé | 55,7 | 5,8 |
| calculé pour $C_4H_5NO_2Cl_4$ | 58,9 | 5,8 |

Dans un réacteur de 500 ml, on introduit sous agitation 210 g de N—[(dichloro-2,2 hydroxy-1) éthyl] dichloroacétamide (0,87 mole) préparé comme indiqué ci-dessus et 300 g de chlorure de thionyle (2,5 moles). On porte à reflux pendant 2 h 30′. On ajoute 300 ml d'hexane pour faciliter la précipitation au cours du refroidissement. Après filtration, on obtient 175 g de N—[(trichloro-2,2,1) éthyl] dichloroacétamide (soit un rendement de 77,5%), sous la forme d'un solide blanc de point de fusion 77—78°C.

On sature 600 ml de THF par de l'ammoniac gazeux et on maintient cette saturation pendant toute la durée de l'opération suivante. En maintenant la température à 0°C, on ajoute sous agitation, en environ 1 heure, 130 g de N—[(trichloro-2,2,1) éthyl] dichloroacétamide (0,5 mole) préparé comme indiqué ci-dessus. Le chlorure d'ammonium formé est séparé par filtration. Le THF est ensuite évaporé sous vide. On obtient ainsi 95,4 g de N—[(dichloro-2,2 amino-1)éthyl] dichloroacétamide (soit un rendement de 79,5%) sous la forme d'un solide blanc de point de fusion 96—97°C.

EXEMPLE N° 15

Préparation du composé de formule:

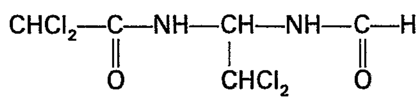

En opérant à l'exemple 3, mais en replaçant le dichloroacétamide et le N—[(tétrachloro-1,2,2,2) éthyl] dichloroacétamide par respectivement le formamide et le N—[(trichloro-1,2,2) éthyl] dichloroacétamide, on obtient, avec un rendement de 74,6%, le N—[(dichloro-2,2 dichloroacétamido-1) éthyl] formamide, de point de fusion 79—80°C.

EXEMPLE N° 16

Préparation du composé de formule:

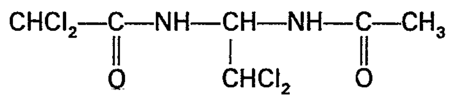

En opérant comme à l'exemple 3, mais en remplaçant le dichloroacétamide et le N-[(tétrachloro-1,2,2,2) éthyl] dichloroacétamide par respectivement l'acétamide et le N-[(trichloro-1,2,2) éthyl] dichloroacétamide, on obtient, avec un rendement de 78%, le N-[(dichloro-2,2 dichloroacétamido-1) éthyl] acétamide, de point de fusion 63—64°C.

EXEMPLE N° 17

Activité antidote d'herbicides des composés selon l'invention.

Un sol, constitué de deux parties en poids d'argile et trois parties en poids de sable, est épandu dans des barquettes en plastique de dimensions 18 × 12 × 5 cm. Sur ce sol on sème, selon 4 sillons de 0,5 cm de profondeur, 10 graines de maïs, variété "Sandrina", et 10 graines d'orge, variété "Rika."

Les semis ainsi réalisés sont séparés en 3 lots, chaque lot contenant 5 barquettes. Sur le ler lot on répand une couche, de 2cm d'épaisseur, d'une terre n'ayant subi aucun traitement. Sur le 2ème lot on répand une couche, d'épaisseur 2 cm, d'une terre dans laquelle on a incorporé par brassage soigné un herbicide naturellement phytotoxique pour le maïs à la dose où il est appliqué. Enfin, sur le 3ème lot, on répand une couche, d'épaisseur 2 cm, d'une terre dans laquelle on a incorporé le même herbicide que pour le 2ème lot, à la même dose, et un produit antidote selon l'invention.

Pour leur incorporation dans la terre l'herbicide et le produit antidote sont formulés sous forme de suspensions aqueuses. Les quantités d'herbicide apportées correspondent à des doses d'herbicides de 5 kg et 10 kg/ha. Les quantités de produit antidote apportées correspondent à des doses égales au dixième des doses de l'herbicide, soit 0,5 et 1 kg/ha. L'herbicide utilisé est l'E.P.T.C. ou N,N-dipropyl thiolcarbamate d'éthyle. Les produits antidote testés sont les composés des exemples 1 à 15.

Les lots de barquettes, une fois traités, sont placés dans une serre maintenue à 20°C et à un taux d'hygrométrie de 70%. 12 et 20 jours après le traitement (J + 12; J + 20), les lots sont examinés et on détermine d'une part l'efficacité herbicide de l'association "antidote + herbicide," d'autre part

l'efficacité antidote du composé selon l'invention testé. L'efficacité antidote E est évaluée en mesurant la hauteur moyenne des plants de maïs dans les trois lots. Elle est donnée par la formule:

$$E = \frac{(C—B) \times 100}{(A—B)}$$

dans laquelle A désigne la taille moyenne des plants de maïs dans les lots témoins non traités, B la taille moyenne des plants de maïs dans les lots traités avec l'herbicide seul et C la taille moyenne des plants de maïs dans les lots traités avec l'herbicide et le produit antidote. Une efficacité antidote égale à O correspond donc à C = B et une efficacité antidote égale à 100 correspond à C = A.

On constate que, dans tous les essais réalisés avec les associations "antidote + herbicide" à faible dose ou à forte dose, les orges, qui servent ici de plantes adventices de référence, sont détruite à 100%, ce qui prouve que l'efficacité herbicide vis-à-vis des graminacées n'est pas réduite par les produits selon l'invention.

Les résultats concernant l'efficacité antidote E sont rassemblés dans le tableau de la page 20.

On voit que les composés des exemples 1, 3, 4, 9, 11 et 14, associés à l'E.P.T.C., ont une efficacité antidote particulièrement marquée

EXEMPLE N° 18

Activité antidote d'herbicide du composé de l'exemple 1.

Dans le présent essai, le produit de l'exemple 1 a été testé suivant la méthode décrite dans l'exemple précédent, mais en faisant varier la dose du produit antidote par rapport à celle de l'herbicide associé (EPTC).

L'herbicide a été appliqué à la dose de 5 kg/ha et le produit de l'exemple 1 aux doses 0 kg/ha (essais avec herbicide seul), 0,312 kg/ha, 0,625 kg/ha, 1,250 kg/ha et 2,500 kg/ha.

Les notations, effectuées au jour J + 20, ont donné pour l'efficatité antidote E les résultats du tableau ci-dessous:

| Dose EPTC kg/ha | Dose du composé de l'exemple 1 kg/ha | Efficacité antidote |
|---|---|---|
| 5 | 0,312 | 77 |
| 5 | 0,625 | 85 |
| 5 | 1,250 | 95 |
| 5 | 2,500 | 111 |

Ce tabelau montre que l'efficacité antidote croit avec la dose du composé de l'exemple 1 et que ce composé ne présente pas de phytotoxicité vis-à-vis du maïs, même à la dose la plus élevée.

Quant au pouvoir herbicide de l'EPTC vis-à-vis des plantes adventices (orge), il n'est pas réduit par les doses croissantes de composé antidote.

EFFICACITES ANTIDOTES

| Date de NOTATION | Doses kg/ha HERB. + ANTID. \ composé de l'exemple | 1 | 2 | 3 | 4 | 5 | 6 | 7 | 8 |
|---|---|---|---|---|---|---|---|---|---|
| J + 12 | 5 + 0,5 | 55 | 66 | 105 | – | 33 | 65 | 68 | – |
| | 10 + 1 | 91 | 47 | 93 | – | 56 | 25 | 15 | – |
| J + 20 | 5 + 0,5 | 98 | 71 | 98 | 93 | 29 | 37 | 55 | 5 |
| | 10 + 1 | 98 | 40 | 86 | 88 | 22 | 18 | 22 | 55 |

| Date de NOTATION | Doses kg/ha HERB. + ANTID. \ composé de l'exemple | 9 | 10 | 11 | 12 | 13 | 14 | 15 | |
|---|---|---|---|---|---|---|---|---|---|
| J + 12 | 5 + 0,5 | 120 | 36 | 100 | 23 | – | 79 | 1 | |
| | 10 + 1 | 89 | 49 | 94 | 24 | – | 68 | 25 | |
| J + 20 | 5 + 0,5 | 86 | 36 | 104 | 11 | – | 94 | 0,15 | |
| | 10 + 1 | 81 | 45 | 90 | 22 | 32 | 78 | 17 | |

**Revendications**

1. Procédé de traitement des cultures pour les protéger contre les dommages occasionnés par les herbicides appartenant aux familles des chloroacétanilides, urées, triazines, carbamates, uraciles et thiolcarbamates, caractérisé en ce qu'il consiste à appliquer sur la surface cultivée, en prélevée ou en post-levée de la culture, avant ou après application de l'herbicide ou en même temps que ce dernier, ou sur la semence de la culture un composé antidote d'herbicides répondant à la formule:

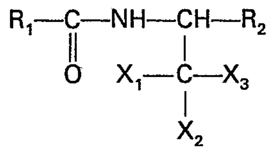

(I)

dans laquelle $R_1$ représente un groupement dichlorométhyle ou trichlorométhyle, $X_1$ représente un atome de chlore ou de fluor, $X_2$ représente un atome de chlore ou de fluor, $X_3$ représente un atome d'hydrogène, de chlore ou de fluor, $R_2$ représente un groupe amino $NH_2$ ou un groupe

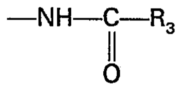

où $R_3$ représente un atome d'hydrogène ou un groupe alkyle, haloalkyle, alkényle, haloalkényle, arylalkyle, arylhaloalkyle, cycloalkyle, halocycloalkyle, alcoxyalkyle, haloalcoxyalkyle ou aryle, ce dernier étant éventuellement substitué par un ou deux atomes d'halogène ou par un groupe alkyle, alcoxy, nitro ou haloalkyle.

2. Procédé selon la revendication 1, caractérisé en ce que l'herbicide appartient à la famille des thiolcarbamates.

3. Procédé selon la revendication 2, caractérisé en ce que l'herbicide est le N,N-dipropyl thiolcarbamate d'éthyle.

4. Procédé selon l'une quelconque des revendications 2 et 3, caractérisé en ce que le composé antidote d'herbicides de formule (I) est choisi parmi le N-[(trichloro-2,2,2 dichloroacétamido-1) éthyl] formamide, le N-[(trichloro-2,2,2 dichloroacétamido-1) éthyl] dichloroacétamide, le N-[(dichloro-2,2 isobutyramido-1) éthyl] dichloroacétamide et le N-[(trifluoro-2,2,2 dichloroacétamido-1) éthyl] dichloroacétamide.

5. Composés de formule:

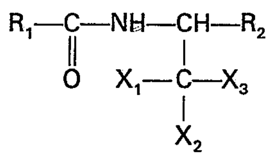

(I)

dans laquelle $R_1$ représente un groupement dichlorométhyle ou trichlorométhyle, $X_1$ représente un atome de chlore ou de fluor, $X_2$ représente un atome de chlore ou de fluor, $X_3$ représente un atome d'hydrogène, de chlore ou de fluor et $R_2$ représente un groupe amino $NH_2$.

6. Composés répondant à la formule (I) de la revendication 1 pour lesquels $X_1$, $X_2$, $X_3$ ne sont pas tous les trois des atomes de chlore et $R_2$ est un groupe

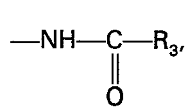

$R_3$ étant tel que défini à la revendication 1.

7. Composés selon la revendication 6, caractérisés en ce que, dans la définition de $R_3$, les chaînes alkyle et alcoxy des groupes alkyle, haloalkyle, arylalkyle, arylhaloalkyl, alcoxyalkyle et haloalcoxyalkyle ont 1 à 5 atomes de carbone, les chaînes alkényle des groupes alkényle et haloalkényle ont 2 à 5 atomes de carbone, les groupes cycloalkyle et halocycloalkyle ont 3 à 6 atomes de carbone, les groupes haloalkyle, haloalkényle, arylhaloalkyle, halocycloalkyle, haloalcoxyalkyle ont 1 à 7 atomes d'halogène pris parmi les atomes de chlore, brome ou fluor, aryl désigne phényl et le substituant halogène du groupe aryle est un atome de chlore.

8. Composés selon la revendication 7 caractérisés en ce que $R_3$ est un atome d'hydrogène, un groupe alkyle ayant 1 à 5 atomes de carbone, un groupe alkényle ayant 2 à 5 atomes de carbone, un groupe haloalkyle ayant 1 à 5 atomes de carbone et 1 à 7 atomes d'halogène ou un groupe phényle substitué par un ou deux atomes de chlore.

9. Composés selon la revendication 8, caractérisés en ce que

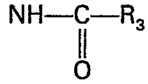

est un groupe formamido, acétamido, isobutyramido, acrylamido, dichloroacétamido, o-chlorobenzamido.

10. Le composé N-[(dichloro-2,2 isobutyramido-1) éthyl] dichloroacétamide.

11. Le composé N-[(trifluoro-2,2,2 dichloroacétamido-1) éthyl] dichloroacétamide.

12. Procédé pour la préparation des composés selon la revendication 5, caractérisé en ce qu'on fait réagir un dérivé chloré de formule:

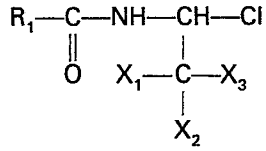 (IV)

dans laquelle $R_1$, $X_1$, $X_2$, $X_3$ ont les mêmes significations que dans la revendication 1, avec de l'ammoniac.

13. Procédé selon la revendication 12, caractérisé en ce que la réaction est effectuée dans un solvant inerte, à une température comprise entre −30°C et +30°C.

14. Procédé pour la préparation des composés selon la revendication 6, caractérisé en ce qu'on fait réagir un composé aminé de formule:

(II) 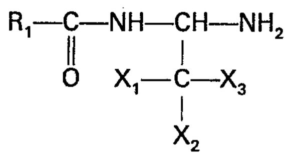 ou (III) 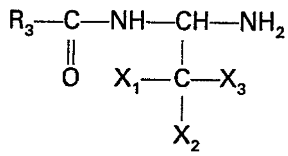

dans laquelle $R_1$, $R_3$, $X_1$, $X_2$, $X_3$ sont tels que définis à la revendication 1 et $X_1$, $X_2$, $X_3$ ne sont pas tous les trois des atomes de chlore, avec respectivement un chlorure d'acide de formule

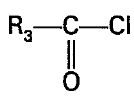 ou 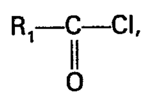

dans laquelle $R_3$ et $R_1$ sont tels que définis à la revendication 1.

15. Procédé selon la revendication 14, caractérisé en ce que la réaction est effectuée dans un solvant inerte, à une température comprise entre −30°C et +60°C et en présence d'une base minérale ou d'une amine tertiaire.

16. Procédé pour la préparation des composés selon la revendication 6, caractérisé en ce qu'on fait réagir un dérivé chloré de formule:

(IV) 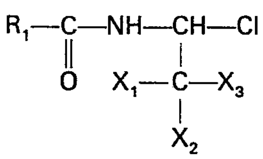 ou (V) 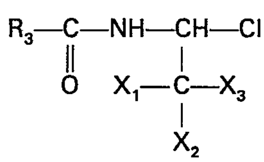

dans laquelle $R_1$, $R_3$, $X_1$, $X_2$, $X_3$ sont tels que définis à la revendication 1 et $X_1$, $X_2$, $X_3$ ne sont pas tous les trois des atomes de chlore, avec respectivement un amide de formule

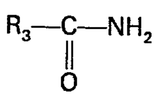 ou 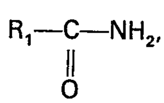

dans laquelle $R_3$ et $R_1$ sont tels que définis à la revendication 1.

17. Procédé selon la revendication 16, caractérisé en ce que la réaction est effectuée dans un solvant inerte, à une température comprise entre −30°C et +60°C et en présence d'une base minérale ou d'une amine tertiaire.

**Claims**

1. A process for the treatment of cultivated crops in order to protect them against the damage caused by herbicides belonging to the chloroacetanilide, urea, triazine, carbamate, uracil and thiolcarbamate families, which comprises applying to the cultivated surface before or after the emergence of the crop, before or after the application of the herbicide or at the same time as the latter, or to the seeds of the crops, a compound which is an antidote to the herbicides corresponding to the formula:

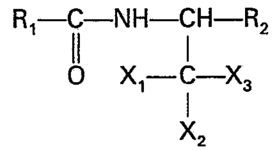

(I)

in which $R_1$ represents a dichloromethyl or trichloromethyl group, $X_1$ represents a chlorine or fluorine atom, $X_2$ represents a chlorine or fluorine atom, $X_3$ represents a hydrogen, chlorine or fluorine atom, $R_2$ represents an amino group $NH_2$ or an

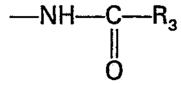

group where $R_3$ represents a hydrogen atom or an alkyl, haloalkyl, alkenyl, haloalkenyl, arylalkyl, arylhaloalkyl, cycloalkyl, halocycloalkyl, alkoxy, alkyl, haloalkoxyalkyl or aryl group, this latter being possibly substituted by one or two halogen atoms or by an alkyl, alkoxy, nitro or haloalkyl group.

2. A process according to claim 1, in which the herbicide belongs to the thiolcarbamate family.

3. A process according to claim 2, in which the herbicide is ethyl N,N-dipropyl-thiolcarbamate.

4. A process according to anyone of the claims 2 and 3, in which the compound of formula (I) is selected from N-[(2,2,2-trichloro-1-dichloroacetamido)-ethyl]-formamide, N-[(2,2,2-trichloro-1-dichloroacetamido-ethyl]-dichloroacetamide, N-[(2,2-dichloro-1-isobutyramido)-ethyl]-dichloroacetamide and N-[(2,2,2-trifluoro-1-dichloroacetamido)-ethyl]-dichloroacetamide.

5. Compounds of the formula:

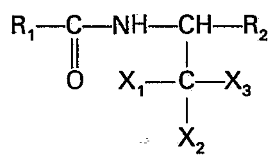

in which $R_1$ represents a dichloromethyl or trichloromethyl group, $X_1$ represents a chlorine or fluorine atom, $X_2$ represents a chlorine of fluorine atom, $X_3$ represents a hydrogen, chlorine or fluorine atom and $R_2$ represents an amino $NH_2$ group.

6. Compounds corresponding to formula (I) of claim 1 for which $X_1$, $X_2$, $X_3$ are not all three chlorine atoms and $R_2$ is a

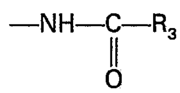

group, $R_3$ being as defined in claim 1.

7. Compounds according to claim 6, in which, in the definition of $R_3$, the alkyl and alkoxy chains of the alkyl, haloalkyl, arylalkyl, arylhaloalkyl, alkoxyalkyl, and haloalkoxyalkyl groups have 1 to 5 carbon atoms, the alkenyl chains of the alkenyl and haloalkenyl groups have 2 to 5 carbon atoms, the cycloalkyl and halocycloalkyl groups have 3 to 6 carbon atoms, the haloalkyl haloalkenyl, arylhaloalkyl, halocycloalkyl, and haloalkoxyalkyl groups have 1 to 7 halogen atoms taken from the chlorine, bromine or fluorine atoms, aryl denotes phenyl and the halogen substituent of the aryl group is a chlorine atom.

8. Compounds according to claim 7, in which $R_3$ is a hydrogen atom, an alkyl group having 1 to 5 carbon atoms, an alkenyl group having 2 to 5 carbon atoms, a haloalkyl group having 1 to 5 carbon atoms and 1 to 7 halogen atoms or a phenyl group substituent by one or two chlorine atoms.

9. Compounds according to claim 8, in which

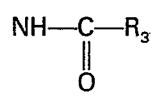

is a formamido, acetamido, isobutyramido, acrylamido, dichloroacetamido, or o-chlorobenzamido group.

10. The compound N-[(2,2-dichloro-1-isobutyramido)-ethyl]-dichloroacetamide.

11. The compound N-[(2,2,2-trifluoro-1-dichloroacetamido)-ethyl]-dichloroacetamide.

12. A process for the preparation of the compounds according to claim 5, in which a chlorinated derivative of the formula:

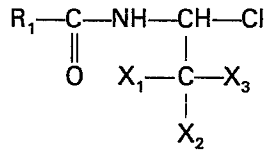

(IV)

in which $R_1$, $X_1$, $X_2$ and $X_3$ have the same significance as in claim 1, is reacted with ammonia.

13. A process according to claim 12, in which the reaction is effected in an inert solvent, at a temperature between −30°C and +30°C.

14. A process for the preparation of the compounds according to claim 6, in which an amino compound of the formula:

(II) 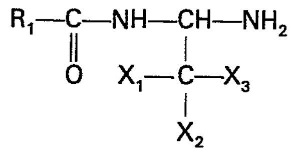 or (III) 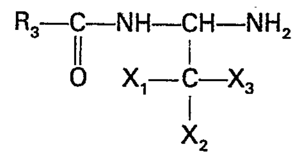

in which $R_1$, $R_3$, $X_1$, $X_2$, $X_3$ are as defined in claim 1 and $X_1$, $X_2$, $X_3$ are not all three chlorine atoms, is reacted with respectively an acid chloride of formula

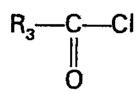 or 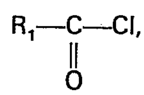

in which $R_3$ and $R_1$ are as defined in claim 1.

15. A process according to claim 14, in which the reaction is effected in an inert solvent, at a temperature between −30°C and +60°C and in the presence of a mineral base or a tertiary amine.

16. A process for the preparation of the compounds according to claim 6, in which a chlorine derivative of the formula:

(IV) 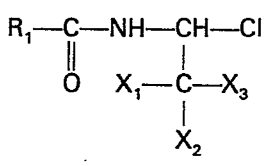 or (V) 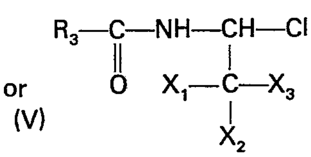

in which $R_1$, $R_3$, $X_1$, $X_2$, $X_3$ are as defined in claim 1 and $X_1$, $X_2$, $X_3$ are not all three chlorine atoms, is reacted respectively with an amide of formula

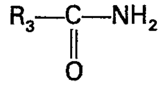 or 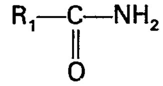

in which $R_3$ and $R_1$ are as defined in claim 1.

17. A process according to claim 16, in which the reaction is effected in an inert solvent, at a temperature between −30°C and +60°C and in the presence of a mineral base or a tertiary amine.

**Patentansprüche**

1. Verfahren zum Schutz von Kulturpflanzen gegen Schäden, die durch zu den Chloracetaniliden, Harnstoffen, Triazinen, Carbamaten, Urazilen und Thiocarbamaten gehörende Herbizide verursacht werden, dadurch gekennzeichnet, daß man auf die Kulturoberfläche vor oder nach dem Aufgehen der Kultur, vor oder nach Aufbringung des Herbizids oder gleichzeitig mit diesem, oder auf das saatgut der Kulturpflanz, als Herbizidantidot eine Verbindung der allgemeinen Formel aufbringt

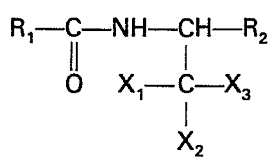

(I),

in der $R_1$ eine Dichlormethyl- oder Trichlormethylgruppe, $X_1$ ein Chlor- oder Fluoratom, $X_2$ ein Chlor- oder Fluoratom, $X_3$ ein Wasserstoff-, Chlor- oder Fluoratom, $R_2$ eine $NH_2$-Aminogruppe oder eine

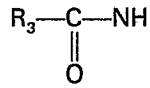

Gruppe, in der $R_3$ ein Wasserstoffatom oder eine Alkyl-, Halogenalkyl-, Alkenyl-, Halogenalkenyl-, Arylalkyl-, Arylhalogenalkyl-, Cycloalkyl-, Halogencycloalkyl-, Alkoxyalkyl-, Halogenalkoxyalkyl- oder Arylgruppe ist, bedeuten, wobei die Arylgruppe gegebenenfalls durch ein oder zwei Halogenatome oder durch eine Alkyl-, Alkoxy-, Nitro- oder Halogenalkylgruppe substituiert sein kann.

2. Verfahren nach Anspruch 1, dadurch gekennzeichnet, daß das Herbizid zur Gruppe der Thiocarbamate gehört.

3. Verfahren nach Anspruch 2, dadurch gekennzeichnet, daß das Herbizid S-Äthyldipropylthiocarbamat (EPTC) ist.

4. Verfahren nach einem der Ansprüche 2 und 3, dadurch gekennzeichnet, daß die Herbizidantidot-Verbindung der Formel (I) aus N-[(2,2,2-Trichlor-1-dichloracetamido)-ethyl]-formamid, N-[(2,2,2-Trichlor-1-dichloracetamido)-ethyl]-dichloracetamid, N-[(2,2-Dichlor-1-isobutyramido)-ethyl]-dichloracetamid und N-[(2,2,2-Trifluor-1-dichloracetamido)-ethyl]-dichloracetamid ausgewählt wird.

5. Verbindungen der Formel:

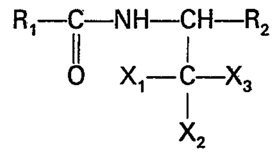

in der $R_1$ eine Dichlormethyl- oder Trichlormethylgruppe, $X_1$ ein Chlor- oder Fluoratom, $X_2$ ein Chlor- oder Fluoratom, $X_3$ ein Wasserstoff-, Chlor- oder Fluoratom und $R_2$ eine $NH_2$-Aminogruppe bedeuten.

6. Verbindungen gemäß der Formel (I) des Anspruchs 1, in denen $X_1$, $X_2$ und $X_3$ nicht alle drei Chloratome bedeuten, $R_2$ eine

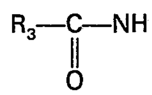

Gruppe ist und $R_3$ die in Anspruch 1 angegebene Bedeutung aufweist.

7. Verbindungen nach Anspruch 6, dadurch gekennzeichnet, daß, in der Bedeutung von $R_3$, die Alkyl- und Alkoxyketten der Alkyl-, Halogenalkyl-, Arylalkyl-, Arylhalogenalkyl, Alkoxyalkyl- und Halogenalkoxyalkylgruppen 1 bis 5 Kohlenstoffatome haben, die Alkenylketten der Alkenyl- und Halogenalkenylgruppen 2 bis 5 Kohlenstoffatome haben, die Cycloalkyl- und Halogencycloalkylgruppen 3 bis 6 Kohlenstoffatome haben, die Halogenalkyl-, Halogenalkenyl-, Arylhalogenalkyl-, Halogencycloalkyl-, Halogenalkoxyalkylgruppen 1 bis 7 Halogenatome, ausgewählt aus Chlor-, Brom- oder Fluoratomen aufweisen, Aryl Phenyl bedeutet und der Halogensubstituent der Arylgruppe ein Chloratom ist.

8. Verbindungen nach Anspruch 7, dadurch gekennzeichnet, daß $R_3$ eine Wasserstoffatom, eine Alkylgruppe mit 1 bis 5 Kohlenstoffatomen, eine Alkenylgruppe mit 2 bis 5 Kohlenstoffatomen, eine Halogenalkylgruppe mit 1 bis 5 Kohlenstoffatomen und 1 bis 7 Halogenatomen oder eine Phenylgruppe, substituiert durch 1 oder 2 Chloratome, bedeutet.

9. Verbindungen nach Anspruch 8, dadurch gekennzeichnet, daß die

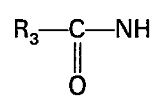

Gruppe eine Formamido-, Acetamido-, Isobutyramido-, Acrylamido-, Dichloracetamido, o-Chlorbenzamidogruppe bedeutet.

10. N-[(2,2-Dichlor-1-isobutyramido)-ethyl]-dichloracetamid.

11. N-[(2,2,2-Trifluor-1-dichloracetamido)-ethyl]-dichloracetamid.

12. Verfahren zur Herstellung von Verbindungen gemäß Anspruch 5, dadurch gekennzeichnet, daß man ein chloriertes Derivat der Formel:

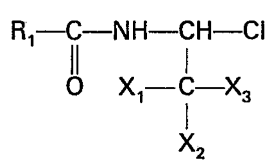

(IV),

in der $R_1$, $X_1$, $X_2$, $X_3$ die gleichen Bedeutungen wie in Anspruch 1 haben, mit Ammoniak zur Umsetzung bringt.

13. Verfahren nach Anspruch 12, dadurch gekennzeichnet, daß die Umsetzung in einem inerten Lösungsmittel bei einer Temperatur zwischen –30°C und +30°C durchgeführt wird.

14. Verfahren zur Herstellung von Verbindungen gemäß Anspruch 6, dadurch gekennzeichnet, daß man eine aminierte Verbindung der Formel

(II), 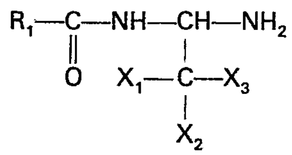 oder (III), 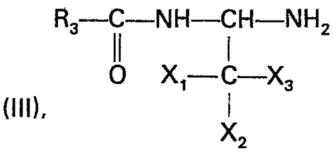

in der $R_1$, $R_3$, $X_1$, $X_2$ und $X_3$ die in Anspruch 1 angegebene Bedeutung haben und $X_1$, $X_2$, $X_3$ nicht alle drei Chloratome bedeuten, mit einem Säurechlorid der Formel

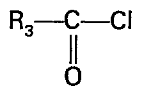 bzw. 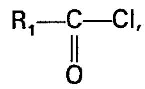

in der $R_3$ und $R_1$ die in Anspruch 1 angegebene Bedeutung haben, zur Umsetzung bringt.

15. Verfahren nach Anspruch 14, dadurch gekennzeichnet, daß die Umsetzung in einem inerten Lösungsmittel bei einer Temperatur zwischen –30°C und +60°C in Gegenwart einer mineralischen Base oder eines tertiären Amins durchgeführt wird.

16. Verfahren zur Herstellung von Verbindungen gemäß Anspruch 6, dadurch gekennzeichnet, daß man ein chloriertes Derivat der Formel

(IV), 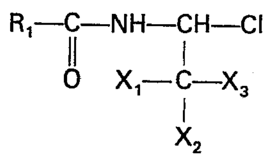 oder (V), 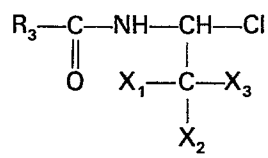

in der $R_1$, $R_3$, $X_1$, $X_2$, $X_3$ die in Anspruch 1 angegebene Bedeutung haben und $X_1$, $X_2$, $X_3$ nicht alle drei Chloratome sind, mit einem Amid

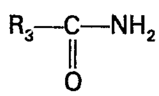 bzw. 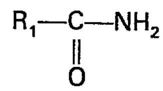

worin $R_3$ und $R_1$ die in Anspruch 1 angegebene Bedeutung haben, zur Umsetzung bringt.

17. Verfahren nach Anspruch 16, dadurch gekennzeichnet, daß die Umsetzung in einem inerten Lösungsmittel bei einer Temperatur zwischen –30°C und +60°C in Gegenwart eine mineralischen Base oder eines tertiären Amins durchgeführt wird.